# EUROPEAN PATENT APPLICATION

(11) **EP 4 650 466 A1**
(43) Date of publication of application: **19.11.2025**
(21) Application number: 25175331.5
(22) Date of filing: 09.05.2025
(51) Int. Cl.: C21D 5/00, C22C 37/00, C22C 37/10, F16D 65/12, C21D 1/09

(54) **METHOD FOR MAKING A BRAKE DRUM OR DISC OR BRAKING BAND**

(30) Priority: 14.05.2024 IT 202400010864
(71) Applicant: Fonderia di Torbole S.r.l., 25030 Torbole Casaglia (Brescia) (IT)
(72) Inventor: BONTEMPI, Gianpietro, I-25030 Torbole Casaglia, BRESCIA (IT); FRIGERIO, Alberto, I-25030 Torbole Casaglia, BRESCIA (IT)
(74) Representative: Chimini, Francesco

(57) **Abstract**

A method for making a brake disc or drum or braking band comprises the steps of:
- obtaining a brake disc or drum or braking band made of gray cast iron with the addition of a carbide-forming element selected from Niobium, Molybdenum, Vanadium, Chromium, Titanium, Tantalum and Tungsten;
- heat-treating at least one braking track of the brake disc or drum or braking band by laser hardening.

## Description

The present invention relates to a method for making a solid or ventilated brake drum or disc, or a braking band for passenger cars and for light or heavy commercial vehicles.

In particular, the invention relates to brake disks/drums or braking bands made of gray cast iron.

Brake disks/drums and braking bands are generally made of gray cast iron (GCI) due to the excellent low-cost castability and workability properties thereof. Furthermore, this material has a high thermal conductivity and damping coefficient, characteristics that are required of the brake disks/drums themselves.

By contrast, however, cast iron is subject to corrosion and has lower mechanical properties compared to steel.

In particular, the wear resistance of gray cast iron brake disks is not sufficiently high, and this implies that during braking, due to abrasion with friction pads, metal particles are produced with the consequent formation of rust and the emission of particles, i.e., fine particulate matter (PM10, PM 2.5, etc.).

In addition to the problem of fine powders, also playing an additional role is the visual effect of brake disks with the presence of corrosion in combination with the deposition that forms upon the rims, which is then difficult to remove.

Furthermore, in the event of the presence of corrosion between the brake disc and friction pads, the squeaking or whistles originating from the brakes, generated after a period of relatively long inactivity, are also considered annoying. Such problem is more evident in electric cars insofar as regenerative braking uses less braking than compared to an internal combustion vehicle.

It should be noted that the European Commission, with the new Euro7 legislation, also sets limits concerning the emission of fine particulate matter generated the braking systems.

For these reasons, there is a strong need among vehicle manufacturers and suppliers of brake disks/drums and braking bands to improve both corrosion resistance and wear resistance.

So far, attempts have been made to address these problems by making discs from gray cast iron (or steel) with a protective coating. A protective coating on the one hand reduces disc wear and on the other protects the gray cast iron base from surface oxidation, thus avoiding the formation of a layer of rust.

Those protective coatings that are available today and applied to discs, although offering wear resistance, are however subject to flaking that causes said coatings to detach from the disc itself (delamination problem).

In order to improve the adhesion of the applied layer, several protective coating technologies have been employed.

Among such technologies, the one currently used the most is known as "Laser Metal Deposition" (LMD). However, such process, in addition to being complicated due to the use of micrometric carbide-based powders (tungsten or titanium), requires reworking of the brake tracks by grinding using special diamond grinding wheels. As a result, with respect to standard brake disc turning machining, the cycle times increase. In addition, this process requires a very high level of investment.

The object of the present invention is to propose a method for making a brake disc or drum or a braking band that is capable of improving both corrosion resistance and wear resistance, while at the same time solving the technological problems and disadvantages of the known technologies mentioned above.

This object is achieved using a method for making a brake disc/drum or a braking band according to claim 1 and using a brake disc/drum or braking band according to claim 11. The dependent claims describe preferred or advantageous embodiments of the invention.

According to claim 1, the brake disc or drum or braking band is obtained from gray cast iron alloyed with carbide-forming elements, for example Niobium, which is capable of increasing the mechanical properties of the brake disc/drum or braking band, in combination with a laser hardening treatment that is capable of increasing wear resistance and consequently reducing fine powder emissions.

The combination of micro-alloyed cast iron and the laser hardening treatment ensure a reduction in wear and emissions, which for certain applications avoids the costly process of applying reports on the braking tracks. In addition to reducing production costs, this combination allows the new restrictions dictated by the Euro7 standard to be met.

In particular, the laser hardening process, which transforms the surface matrix of the braking surfaces, allows the surface hardness to be further increased, thus reducing wear and fine dust emissions.

According to claim 11, the brake disc or drum or braking band according to the invention is made of gray cast iron microbonded with at least one carbide-forming element selected from Niobium, Molybdenum, Vanadium, Chromium, Titanium, Tantalum and Tungsten, and on at least one braking surface thereof is made with at least one track having a martensitic surface microstructure.

The at least one carbide-forming element present in an amount comprised between 0.1% and 0.8% by mass. This is therefore a significant amount that is capable of modifying and improving the mechanical properties of the brake disc/drum or braking band.

In one embodiment, the carbide-forming element is Niobium in an amount between 0.1% and 0.7%.

In one embodiment, the track, having a martensitic surface microstructure, has a hardening depth of between 0.2 mm and 1.5 mm.

In one embodiment, on at least one braking surface of the brake disc or drum or braking band, at least two tracks are formed having a martensitic surface microstructure and partially overlapping or spaced apart by a separation zone that is not subjected to laser hardening treatment of an amplitude equal to or less than about 8 mm.

In one embodiment, said at least two partially superimposed or spaced tracks are concentric with each other and are in the form of a circular crown. In this case, if present, the separation zone may be shaped as a circular crown.

In a preferred embodiment, the plurality of tracks subjected to laser hardening treatment affects substantially the entire braking surface of the disc, drum, or braking band.

Further features and advantages of the method according to the invention will become apparent from the following detailed description of the preferred embodiments thereof, given by way of non-limiting example, with reference to the accompanying figures, wherein:
- Figure 1 is a flow diagram representing the main steps of a method for making a brake disc or drum or braking band, according to the present invention;
- Figure 2 is a table showing an example of a chemical composition of a brake disc or drum or braking band made of Niobium-alloyed gray cast iron;
- Figure 2a is a table showing the chemical composition of the table in Figure 2, wherein the percentages by mass of the elements of the composition are divided according to the field of application, i.e., low carbon for passenger cars, high carbon for passenger cars or light commercial vehicles, high carbon for commercial vehicles;

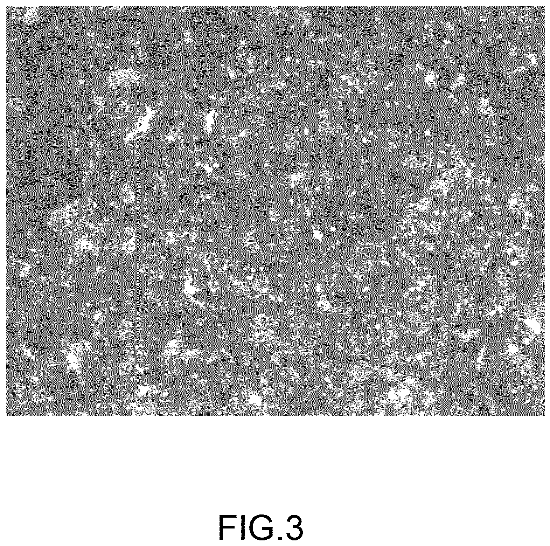

- Figure 3 is a photograph showing the distribution of the niobium carbides within a metal matrix after chemical etching using 3% Nital, wherein the carbides are highlighted as white spots incorporated within the matrix and uniformly dispersed therein;
- Figures 4 and 4a schematically show a laser hardening process applicable to a brake disc or drum or braking band;
- Figure 5 is an axial section of a portion of a brake disc subjected to a laser hardening process along two concentric and partially superimposed tracks;
- Figure 6 is a plan view of a brake disc subjected to a laser hardening process along two concentric tracks;
- Figures 7 and 8 are views similar to those of Figures 5 and 6, but wherein the hardening process has been carried out along three concentric tracks;
- Figure 9 is a graph relating to experimental data that show the variation in the hardness of the adjacent braking tracks within an overlap zone;
- Figure 10 is a graph showing the results of experimental tests relating to the braking performance measured during the efficiency test (AK-Master test according to the SAE J2522 specification), in the case of a standard gray cast iron brake disc (STD), a brake disc bonded with niobium carbides (referred to as an LWM disc, "Low Wear Material"), a gray cast iron brake disc with laser hardening (referred to as an LH disc, "Laser Hardening"), and a brake disc LWM with laser hardening (referred to as an LWM + LH disc);
- Figure 11 is a summary graph of the loss of mass (wear) at the end of the AK-Master test for the following types of standard gray cast iron (STD) brake disc: a LWM disc, a standard disc with laser hardening LH and a LWM disc with laser hardening (LWM + LH); and
- Figure 12 is a summary graph of PM10 emissions [mg/km/disc] for the following types of standard gray cast iron (STD) brake disc: a LWM disc, a standard disc with laser hardening (STD+LH) and a LWM disc with laser hardening (LWM+LH) tested during the WLTP cycle.

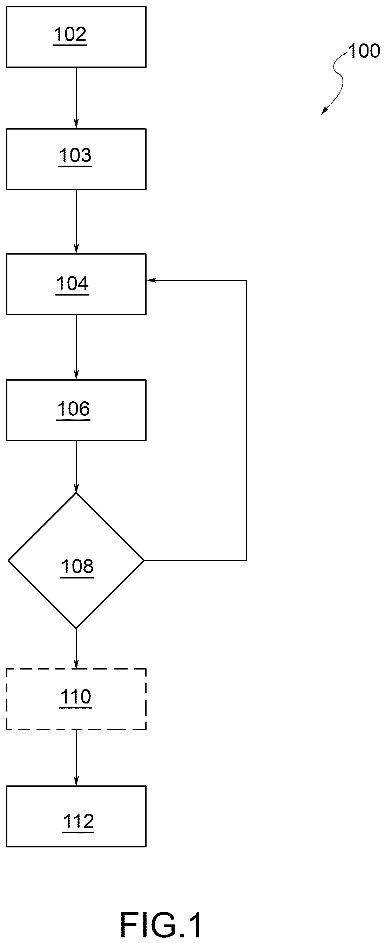

According to a general aspect of the present invention, and with reference to the flow chart of Figure 1, a method 100 for producing a brake disc or drum or braking band 10 is proposed.

In the following description, unless otherwise specified, the terms "brake disc", "brake drum" and "braking band" are used jointly or interchangeably insofar as they are known to designate a component of a braking system on the outer surface of which friction pads, for example brake pads, act to perform a braking action. In the following description, the terms "brake disc," "brake drum," and "braking band" may be replaced by the term "workpiece" for simplicity.

The outer surface of the disc, drum or braking band, on which the friction pads act, is therefore also defined as the "braking surface".

The method provides for obtaining a brake disc or drum or braking band 10 made of gray cast iron with the addition of at least one carbide-forming element selected from Niobium, Molybdenum, Vanadium, Boron, Chromium, Titanium, Tantalum and Tungsten (step 102).

The at least one carbide-forming element is added in an amount comprised between 0.1% and 0.8% by mass.

Subsequently, after processing the blank workpiece (step 103), at least one track 12 of the braking surface of the brake disc or drum or braking band 10 is heat-treated by laser hardening.

In more detail, with reference to the flow chart of Figure 1, after obtaining the workpiece 10, the parameters that define the execution of the laser hardening process (step 104) are set, for example on a processing unit - not shown - that is suitable for controlling the laser hardening process.

For example, depending upon the extension and depth characteristics of the area to be subjected to the laser hardening process, the power of the laser source is set, with the possibility of varying its power during the process, the rotational speed of the brake disc or drum or braking band about its own rotational axis X, and/or the translation speed of the laser source, and/or the inclination of the laser beam with respect to the surface to be treated, and/or the focal distance of the laser.

The laser hardening process (step 106) is then performed on at least one track 12 per side of the braking surface of the brake disc or drum or braking band 10.

Subsequently, if several tracks 12 have to be subjected to laser hardening (step 108), it may be necessary to repeat step 104 to set the execution parameters of the laser hardening process.

In a variant embodiment, further tracks 12 may be subjected to the laser hardening process simultaneously together with the first track 12.

After the laser hardening treatment, the workpiece may be subjected, if necessary, to further finishing (step 110), for example by means of grinding, and to subsequent painting (step 112).

Returning now to the composition of the material constituting the brake disc/drum or braking band 10, those carbide-forming elements that are usable in the context of the present invention are part of the group 4, 5 and 6 of the periodic table belonging to the group of transition metals. These include Niobium, Molybdenum, Vanadium, Chromium, Titanium, Tantalum, and Tungsten which, based on certain percentages (between 0.1 % and 0.8 %) allow an increase in wear resistance.

In particular, the gray cast iron used to make the brake disc or drum or braking band according to the invention is a hypoeutectic graphitic cast iron with a low equivalent carbon content or else eutectic or hypereutectic with high carbon content equivalent.

The effects of Niobium, as well as of the other elements listed above, when added to gray cast iron are as follows:
- increase in the mechanical properties of gray cast iron due to a reduction in the size of the eutectic cells and the greater number thereof;
- stabilization and refinement of the perlite;
- increased hardness and abrasive wear resistance;
- increased resistance to thermal fatigue;
- stability at high temperatures;
- increased resistance to corrosion;

As mentioned, possible alternative elements with Niobium-like properties may be Molybdenum, Vanadium, Chromium, Titanium, and Boron. For example, it has been experimentally determined that these alternative elements may be added with the following percentages:
- Molybdenum: Max. 0.8%;
- Titanium: 0.025-0.040%;
- Boron: Max at 0.2%;
- Chromium: Maximum 0.5 %
- Vanadium: Maximum 0.2 %

Adding Niobium to the cast iron of brake disks and drums therefore allows the graphite percentage to be increased, while maintaining the same degree of resistance, and therefore to optimize the thermal conductivity and damping behavior.

This also allows the brake disks/drums to be redesigned so as to consider lower thicknesses, thus also reducing weight. Insofar as the disc/drum is an unsprung mass, the reduction in the weight thereof ensures lower consumption and emissions of CO2, as well as an improvement in handling when driving.

Niobium is particularly suitable insofar as it is readily available and the market price of ferro-niobium is low.

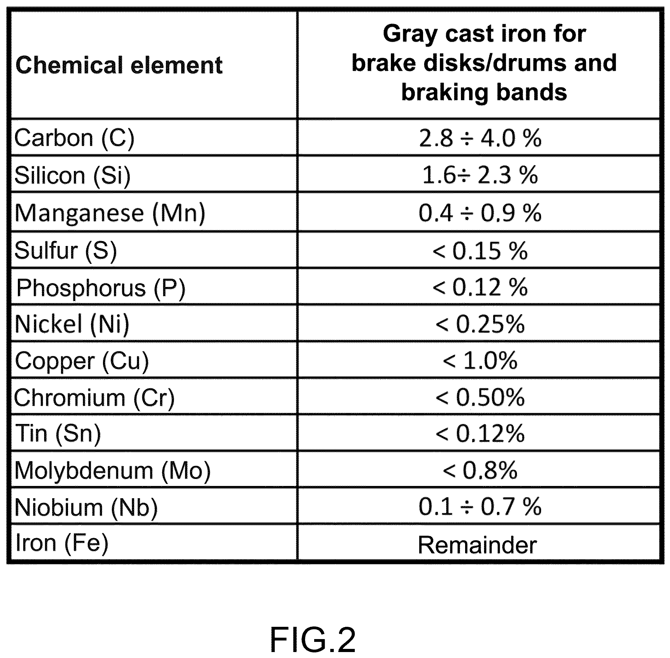

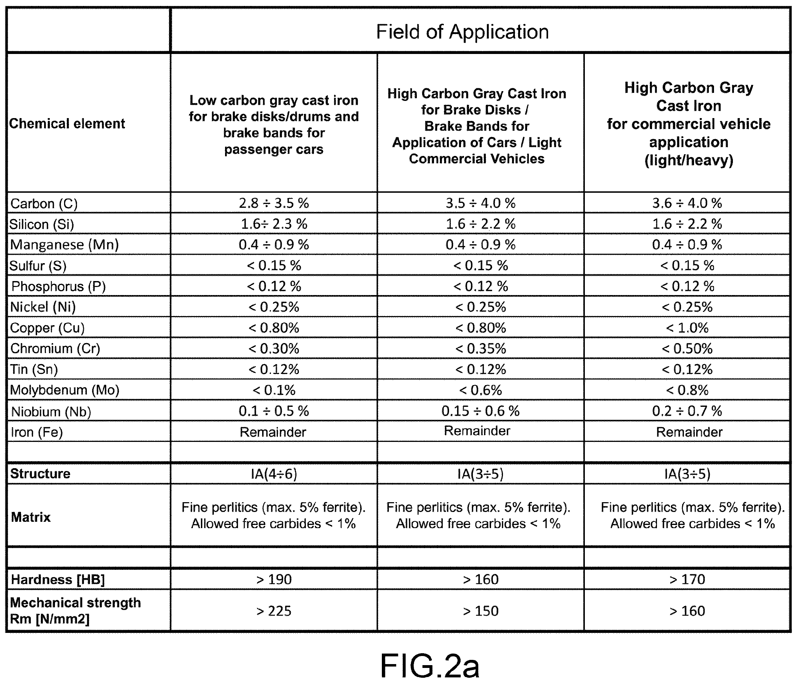

The table in Figure 2 shows an example of the chemical composition of the material constituting a brake disc/drum or braking band made of Niobium-alloyed gray cast iron, where for each element of the composition a range of its percentage by mass is indicated.

In particular, niobium may be present with a percentage by mass of between 0.1% and 0.7%.

The table in Figure 2a shows the same chemical composition as the table in Figure 2, but wherein the percentage ranges by mass of the individual elements have been specified based upon three possible applications of use, i.e., low carbon gray cast iron brake disc or drum or braking band for passenger cars, high carbon for passenger cars or light commercial vehicles, and high carbon for light and heavy commercial vehicles.

Experimental tests performed in the foundry and the subsequent fine-tuning of the melting process made it possible to ensure a homogeneous distribution of Niobium carbides over the entire section of the disc/drum/brake band with no concentrations located on one braking track relative to another.

In combination with the choice of the chemical composition of the material, a process has been developed to increase the wear and corrosion resistance of braking surfaces.

As mentioned above, the method provides for treating braking tracks with a laser beam 20, produced by a source of laser light, which instantly transforms the surface microstructure from perlite into martensite.

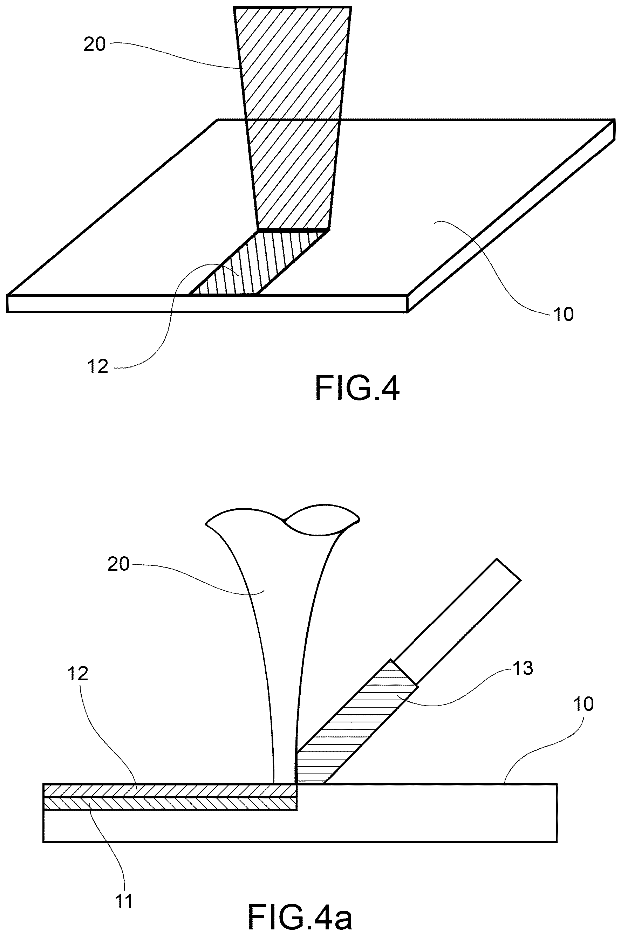

Figures 4 and 4a schematically show a laser hardening process. Laser hardening is a surface heat treatment process that uses, for example, high-power diode lasers to improve the strength and durability of defined surface areas. Unlike with other processes, a laser may be very selective, hardening only targeted areas of steel and cast iron. Minimal or zero distortion avoids further reworking. The goal of all metal hardening processes is to ensure the structural transformation of steel and cast iron materials to confer greater strength thereto. First of all, the original structure of the ferritic-perlitic material is austenitized by means of heating it and then transformed into a martensite by hardening it.

In this case, hardening using high-power diode lasers also has the advantage of allowing heat to be supplied only within certain areas. For complex components, this process allows the parts to harden while maintaining, in other areas, the ductility of the initial structure. Insofar as with laser hardening, the workpiece is only heated in proximity to the surface, with a reduced depth of hardening, the heat is transferred very efficiently to the adjacent material. In most cases, therefore, no additional cooling means is required thereby keeping costs low. Insofar as deformation is minimal compared to other hardening techniques, additional corrective methods for the material are generally not required.

The laser hardening process is schematically represented in Figure 4. The laser beam 20, arranged at a certain focal height, causes localized heating at the level of the surface level by raising it to the processing temperature of cast iron. The track 12, once subjected to laser hardening, is then completed by placing the workpiece 10 in rotation in relation to the laser head. As may be seen in Figure 4, between the treated track 12 and the base material of the piece 10 there is a thermally altered intermediate transition zone 11 that is characterized by a hardness gradient. To avoid oxidation of the surface being treated, an inert gas 13 may be used.

Complete transformation of the matrix is ensured by defining the rotational speed of the workpiece and/or the advancement speed of the laser source.

From the tests performed, it is observed that in order to achieve a good compromise between reducing wear and increasing corrosion resistance, while balancing the increase in cycle times and deformation of the workpiece caused by the high temperatures reached, the ideal hardening depth lies between 0.2 mm and 1.5 mm.

Insofar as the core portion of the material is left untreated, it is possible to combine a rigid and resistant outer surface with a core that has good heat conduction and elasticity thereby allowing for reduced crack propagation.

Depending upon the type of focal point type of the laser, it is also possible to laser harden the braking surface of the workpiece 10 so as to obtain one or more tracks 12.

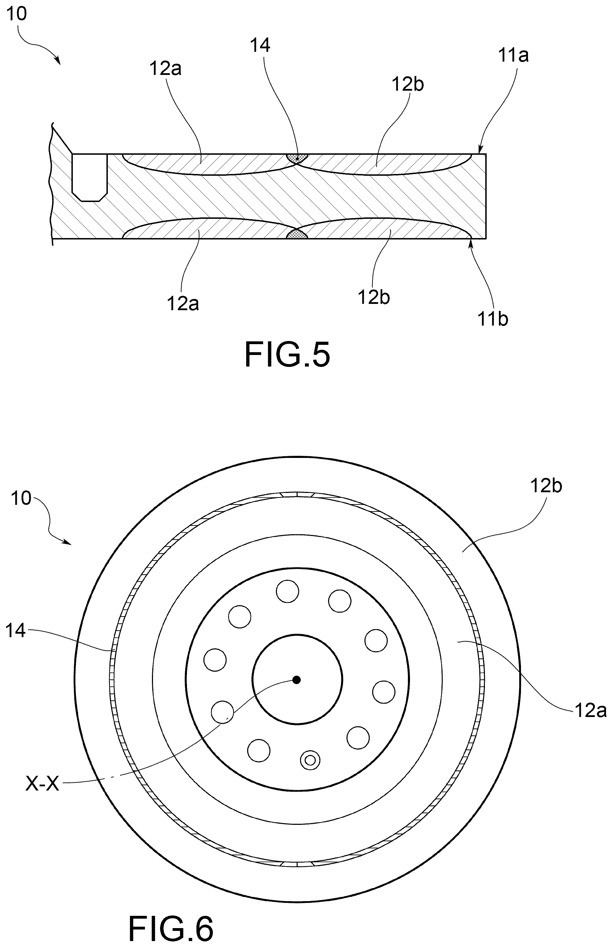

Figures 5 and 6 show a brake disc 10 on opposite breaking surfaces 11a, 11b of which two tracks 12a, 12b that are concentric with respect to the rotational axis X of the brake disc 10 have been subjected to laser hardening.

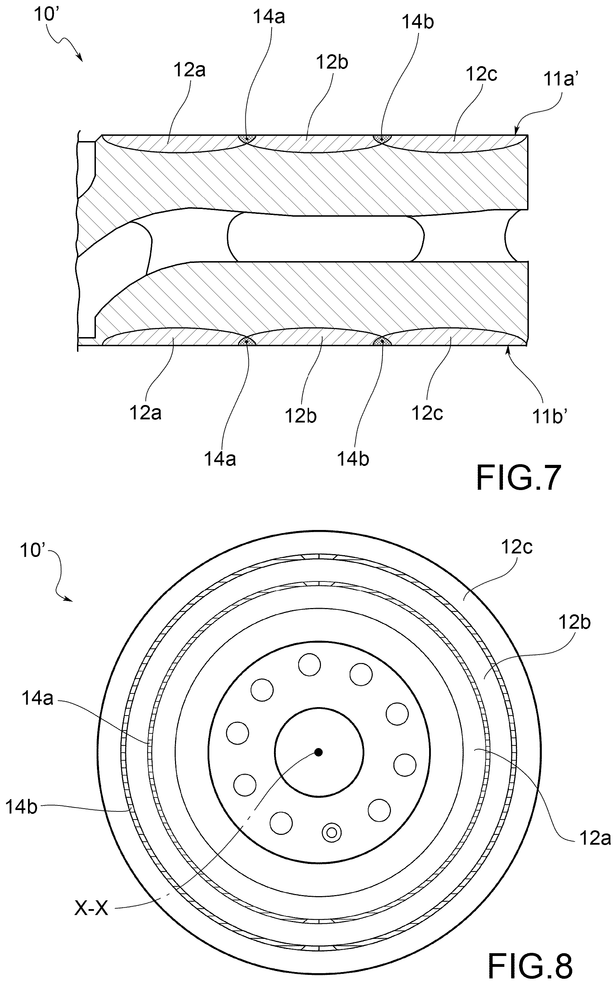

Figures 7 and 8 show a brake disc 10' wherein, upon the opposite braking surfaces 11'a, 11'b of which three tracks 12a, 12b and 12c, which are concentric with respect to the rotational axis X of the brake disc 10', have been subjected to laser hardening.

According to another aspect of the invention, at least two tracks 12 that are adjacent therebetween and subjected to laser hardening may have an overlapping zone 14. For example, in the case of circular crown-shaped tracks 12, such overlapping zone 14 is annular in shape.

In the example of Figure 5 and 6, the two tempered tracks 12a, 12b may have an annular overlapping zone 14.

In the example of Figures 7 and 8, on each side of the brake disc 10' the innermost track 12a and the intermediate track 12b may form a first annular overlapping zone 14a; the intermediate track 12b and the outer track 12c form a second annular overlap zone 14b.

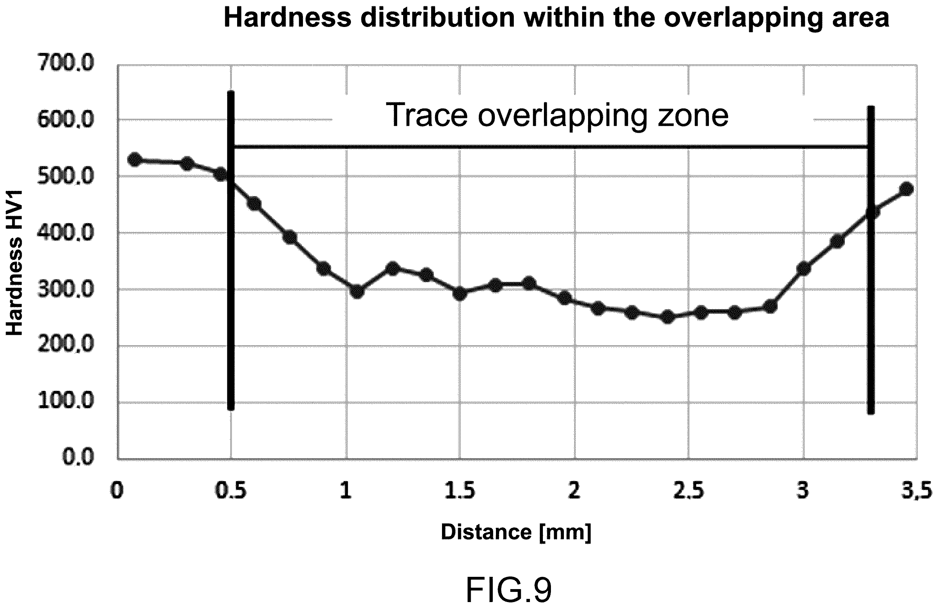

As shown in the graph in Figure 9, it has in fact been noted that the overlapping zones 14 between adjacent tracks 12 have a lower hardness than the non-overlapping tempered zones. Tests carried out have also shown that such discontinuity in the hardness of the tempered zones results in a positive response in terms of crack resistance insofar as the superposition of two different thermally altered zones, generated at different times, may, under particular conditions, induce relaxation or partial restoration of the previously treated portion of the braking track.

Furthermore, the possibility of dividing a tempered surface into different partially superimposed tracks 12 makes it possible to balance any possible deformations in the overall braking track that may be generated by the thermal process.

In other words, a reclaimed area is generated within the area where the tempered tracks overlap, which area is characterized by a lower hardness than the tempered area.

It is however also possible to obtain an area with lower hardness than within tempered areas by spacing two adjacent tracks, that are for example concentric therebetween, or by interposing an untempered separation area therebetween, in such a way that the distance between tempered areas is at most about 8 mm.

In this case, the mechanical and metallurgical features are less effective than those obtained within the reclaimed overlapping zone, but are nonetheless useful for reducing hardness in relation to tempered areas and in increasing resistance to cracking.

According to a preferred embodiment, substantially the entire braking surface is subjected to laser hardening. In this case, the braking surface laser hardening treatment may be carried out in several steps, i.e., by rendering multiple annular hardened tracks 12 adjacent or partially superimposed, as described above, or in one step.

In fact, current laser technology also makes it possible to obtain the transformation of the entire braking surface in a single step. If, from the point of view of performance, the area where the concentric tracks overlap acts as an obstacle to the propagation of surface thermal cracks, it is evident that, from the point of view of cycle times, heat treatment carried out in a single step is advantageous. In both cases the surface treated using a laser beam is preferably close to 100% of the braking surface.

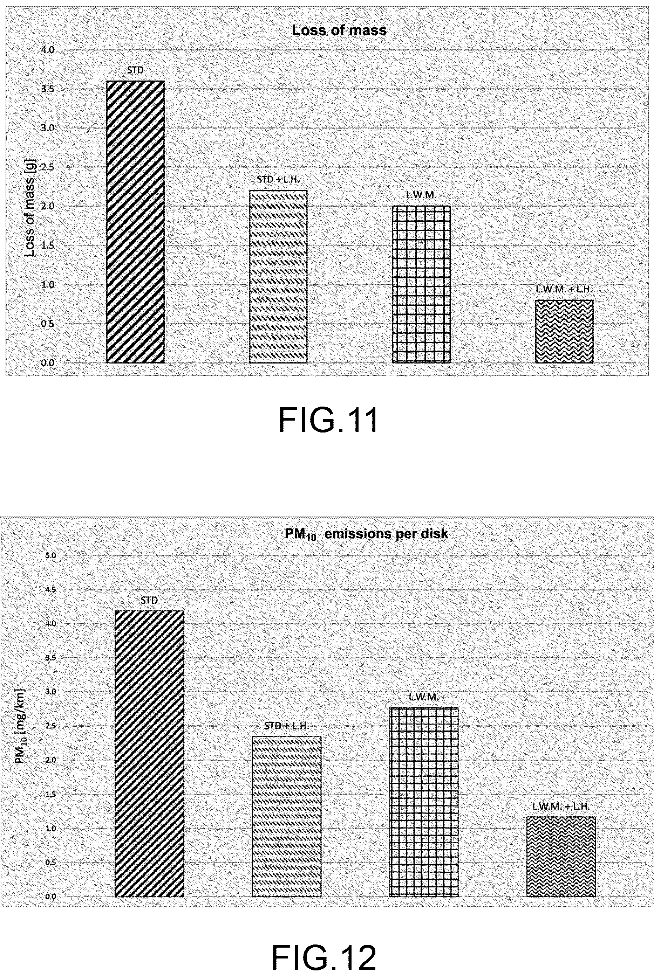

Experimental tests performed on disks made of gray cast iron microbonded to Niobium (in the accompanying graphs identified as LWM "Low Wear Material" disks), on gray cast iron disks with braking surface hardening (in the accompanying graphs identified as LH disks, "Laser Hardening"), on standard gray cast iron disks (STD), and on disks that combine both solutions (LWM+LH disks), showed that the combined solution (LWM+LH disks) has a wear reduction estimated at about 80% (Figure 11) with PM10 emissions more than 70% lower than with standard gray cast iron disks (Figure 12).

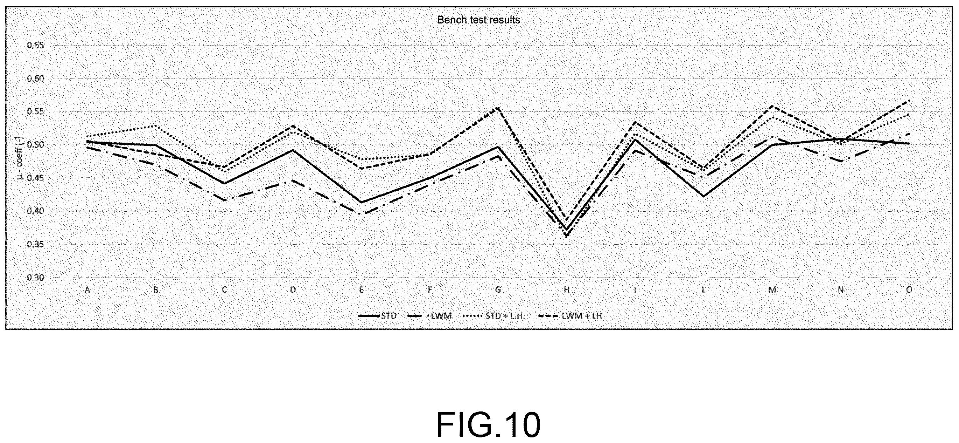

A further advantage of the proposed solutions is that, with the same friction pads, the braking performance measured during the efficiency tests (AK-Master test according to the SAE J2522 specification) is comparable (Figure 10).

Furthermore, since the combined solution (LWM+LH) results in having an outer layer that is less hard than the LMD solution and reduces the deformations generated by the thermal process, the subsequent correction step may not be necessary (at best) or may require quicker and more economical processing (at worst).

It may therefore be concluded that the combination of these effects makes it possible to achieve a reduction in wear that is far greater than the sum of the individual contributions, thus making the combined solution (LWM+LH) very effective in achieving the targets imposed by the Euro 7 standard.

To the embodiments of the method for making a brake disc or drum or a braking band according to the invention, a person skilled in the art may, in order to meet contingent needs, make changes, adaptations, and replacements of elements with functionally equivalent ones, without departing from the scope of the following claims. Each of the features described as belonging to a possible embodiment may be obtained independently of the other described embodiments.

## Claims

1. A method for making a brake disc or drum or braking band, comprising the steps of:
- obtaining a brake disc or drum or braking band made of gray cast iron with the addition of at least one carbide-forming element selected from Niobium, Molybdenum, Vanadium, Chromium, Titanium, Tantalum, and Tungsten, said at least one carbide-forming element being added to the gray cast iron in a mass percentage between 0.1% and 0.8%;
- heat-treating at least one braking track of the brake disc or drum or braking band by laser hardening.

2. Method according to claim 1, wherein the gray cast iron is either hypoeutectic graphitic gray cast iron with a low equivalent carbon content, or eutectic, or hypereutectic gray cast iron with a high equivalent carbon content.

3. Method according to claim 1 or 2, wherein the carbide-forming element is Niobium in an amount between 0.1% to 0.7%.

4. Method according to claim 3, wherein the gray cast iron has a Carbon percentage between 2.8% and 3.5%, and wherein the Niobium percentage is between 0.1% and 0.5%.

5. Method according to claim 3, wherein the gray cast iron has a carbon percentage between 3.5% and 4.0%, and wherein the Niobium percentage is between 0.15% and 0.6%.

6. Method according to claim 3, wherein the gray cast iron has a Carbon percentage between 3.6% and 4.0%, and wherein the Niobium percentage is between 0.2% and 0.7%.

7. Method according to any one of the preceding claims, wherein the gray cast iron comprises the following elements:
- Carbon, in an amount between 2.8% and 4.0% by mass;
- Silicon, in an amount between 1.6% and 2.3% by mass;
- Manganese, in an amount between 0.4% and 0.9% by mass;
- Sulfur, in an amount less than 0.15% by mass;
- Phosphorus, in an amount less than 0.12% by mass;
- Nickel, in an amount less than 0.25% by mass;
- Copper, in an amount less than 0.1% by mass;
- Chromium, in an amount less than 0.5% by mass;
- Tin, in an amount less than a 0.12% by mass;
- Molybdenum, in an amount less than 0.8% by mass;
- Niobium, in an amount between 0.1% and 0.7% by mass;
- Iron, the balance.

8. Method according to any one of the preceding claims, wherein the hardening depth varies between 0.2 mm and 1.5 mm.

9. Method according to any one of the preceding claims, wherein substantially all of the braking surface of the brake disc or drum or braking band is heat-treated by laser hardening.

10. Method according to any one of the preceding claims, wherein at least two braking tracks are heat-treated by laser hardening, and wherein adjacent braking tracks heat-treated by laser hardening are partially superimposed or mutually spaced apart by a non-heat-treated zone so that the distance between adjacent braking tracks heat-treated by laser tempering is equal to or less than about 8 mm.

11. A brake disc or drum or braking band, made of gray cast iron micro-alloyed with at least one carbide-forming element selected from Niobium, Molybdenum, Vanadium, Chromium, Titanium, Tantalum, and Tungsten, in an amount between 0.1% and 0.8% by mass, and wherein at least one track having a martensitic surface microstructure is made on at least one braking surface thereof.

12. Brake disc or drum or braking band according to claim 11, wherein the gray cast iron is either hypoeutectic graphitic gray cast iron with low equivalent carbon content, or eutectic, or hypereutectic gray cast iron with high equivalent carbon content, and wherein the carbide-forming element is Niobium in an amount between 0.1% and 0.7%.

13. Brake disc or drum or braking band according to claim 11 or 12, wherein the at least one track heat-treated by laser hardening has a martensitic surface microstructure with a depth between 0.2 mm and 1.5 mm.

14. Brake disc or drum or braking band according to any one of claims from 11-13, wherein substantially all of the braking surface has a martensitic surface microstructure.

15. Brake disc or drum or braking band according to any one of the claims from 11-14, wherein at least two braking tracks having a martensitic surface microstructure are made on at least one braking surface thereof, and wherein at least two adjacent braking tracks having a martensitic surface microstructure are partially superimposed or mutually spaced apart by a separation zone so that the distance between adjacent braking tracks having a martensitic surface microstructure is equal to or less than about 8 mm.

16. Brake disc or drum or braking band according to claim 15, wherein said at least two tracks partially superimposed or mutually spaced apart are mutually concentric and are in the shape of a circular crown.

17. Brake disc or drum or braking band according to any one of the claims from 11-16, wherein the gray cast iron comprises the following elements:
- Carbon, in an amount between 2.8% and 4.0% by mass;
- Silicon, in an amount between 1.6% and 2.3% by mass;
- Manganese, in an amount between 0.4% and 0.9% by mass;
- Sulfur, in an amount less than 0.15% by mass;
- Phosphorus, in an amount less than 0.12% by mass;
- Nickel, in an amount less than 0.25% by mass;
- Copper, in an amount less than 0.1% by mass;
- Chromium, in an amount less than 0.5% by mass;
- Tin, in an amount less than a 0.12% by mass;
- Molybdenum, in an amount less than 0.8% by mass;
- Molybdenum, in an amount between 0.1% and 0.7% by mass;
- Iron, the balance.
